# EUROPÄISCHE PATENTSCHRIFT

(11) **EP 1 520 078 B1**
(45) Veröffentlichungstag und Bekanntmachung des Hinweises auf die Patenterteilung: **15.02.2006**
(21) Anmeldenummer: 03762674.4
(22) Anmeldetag: 09.07.2003
(51) Int. Cl.: E04B 1/344, B09B 3/00, B60S 5/00

(54) **MOBILE TROCKENLEGUNGSSTATION F R KRAFTFAHRZEUGE**
MOBILE DRAINING STATION FOR MOTOR VEHICLES
STATION D'ASSECHEMENT MOBILE POUR VEHICULES AUTOMOBILES

(30) Priorität: 09.07.2002 DE 20210627 U
(43) Veröffentlichungstag der Anmeldung: 06.04.2005
(73) Patentinhaber: Dagn, Josef, A-6345 Kössen (AT)
(72) Erfinder: Dagn, Josef, A-6345 Kössen (AT)
(74) Vertreter: Klingseisen, Franz
(86) Internationale Anmeldenummer: PCT/EP2003/007416
(87) Internationale Veröffentlichungsnummer: WO 2004/005634

(56) Entgegenhaltungen:
- WO-A-01/83328
- DE-A- 4 404 882
- DE-C- 4 110 419
- DE-U- 29 721 907

## Beschreibung

Die Erfindung betrifft eine mobile Trockenlegungsstation für Kraftfahrzeuge, die verschrottet oder anderweitig entsorgt werden sollen.

Beispiele von mobilen Trockenlegungstationen sind in DE 92 073 154, DE 29 721 907 U, DE 4 110 419 C und DE 4 343 714 C beschrieben.

Aufgabe der Erfindung ist, eine für den Transport kompakte Trockenlegungsstation vorzusehen, die im Betriebszustand einen ausreichenden Arbeitsraum bietet.

Dies wird erfindungsgemäß im Wesentlichen durch die Merkmale des Anspruchs 1 erreicht. Dadurch, dass Wandteile des Containers hochklappbar sind und Sammelbehälter für die zu entsorgenden Flüssigkeiten aus dem Container herausfahrbar sind, ergibt sich in der Betriebsstellung der mobilen Trockenlegungsstation ein von Sammelbehältern ungestörter Arbeitsraum.

Eine beispielsweise Ausführungsform der Erfindung wird nachfolgend anhand der Zeichnung näher erläutert. Es zeigen
- Fig. 1: in einer perspektivischen Ansicht die Trockenlegungsstation im Transportzustand,
- Fig. 2: schematisch die Trockenlegungsstation mit hochgeklappter Seitenwand und oberer Wand,
- Fig. 3: schematisch in einer Rückansicht abgeklappte Türelemente in der Rückwand des Containers,
- Fig. 4: zwei Darstellungen der Positionierung der Sammelbehälter,
- Fig. 5: eine Fixiereinrichtung für die Schwenkarme,
- Fig. 6: eine schematische Ansicht des Ansetzens eines Tankanbohrgerätes,
- Fig. 7: im Einzelnen das Bohrgerät nach Fig. 6,
- Fig. 8: eine Vorrichtung zur Höhenverstellung des Bohrgerätes,
- Fig. 9: ein Steuerventil zum Absaugen von Treibstoff,
- Fig. 10: ein Getriebeanbohrgerät,
- Fig. 11: eine Höheneinstelleinrichtung für das Bohrgerät,
- Fig. 12: ein Fußpedal zum Betätigen des Bohrgerätes,
- Fig. 13: Bohraufsätze zur Höheneinstellung,
- Fig. 14: eine Vorrichtung für die Qualitätssicherung,
- Fig. 15: Trichter für die Aufnahme von Altöl,
- Fig. 16: eine Bremsschlauchzange, und
- Fig. 17: eine Absaugpistole.

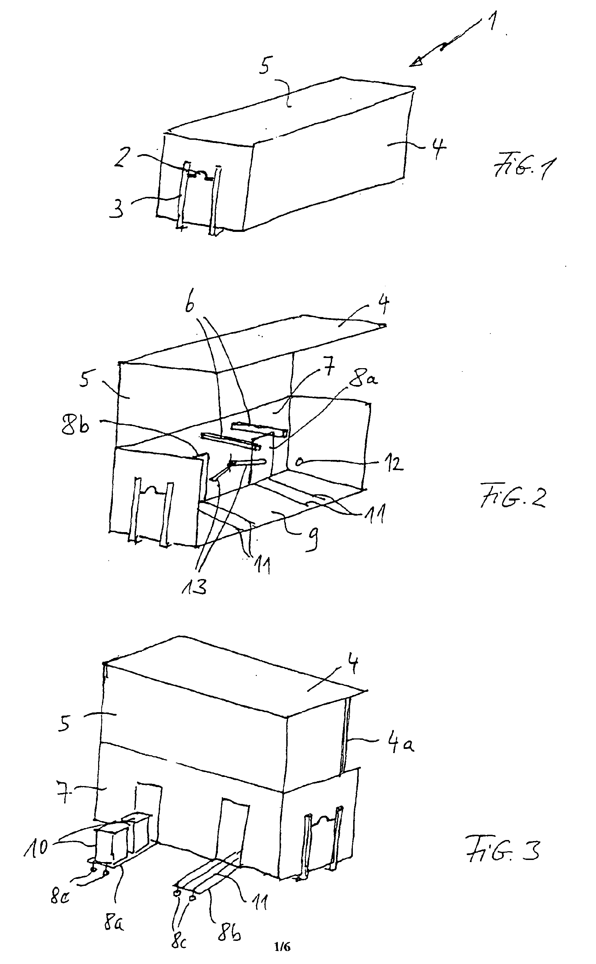

Fig. 1 zeigt in perspektivischer Darstellung einen Container 1 mit den Standardabmessungen eines für den Transport von Gütern vorgesehenen Containers. An der Stirnseite ist ein Aufnahmebügel 2 an einem Traggestell 3 vorgesehen, damit der Container über ein Kranfahrzeug oder dergleichen auf eine Ladefläche für den Transport aufgenommen werden kann.

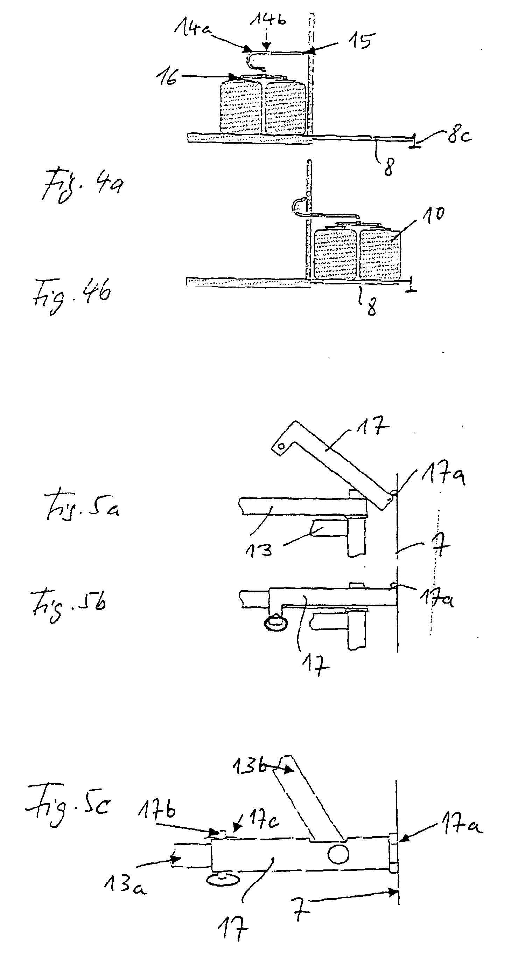

Bei dem in Fig. 2 wiedergegebenen Ausführungsbeispiel ist die vordere Seitenwand 4 des Containers zusammen mit der oberen Wand 5 hochklappbar, so dass die Seitenwand 4 eine Dachfläche bildet. In dem Container 1 sind stationär zwei Tragarme 6 für das trockenzulegende Fahrzeug etwa in der Mitte der Rückwand 7 angeordnet, die in Fig. 2 nur schematisch angedeutet sind. In der Betriebsstellung nach Fig. 2 wird ein trockenzulegendes Fahrzeug mittels eines Gabelstaplers oder einer entsprechenden Hubeinrichtung auf den Tragarmen 6 abgesetzt und nach der Trockenlegung wieder abgenommen.

Nach einer anderen Ausführungsform wird die obere Wand 5 mit Hilfe einer Kurbel, die mit einer Sicherheitsfeder ausgestattet ist, etwas angehoben, worauf eine Verlängerung des Daches, die aus drei Teilen besteht, nach außen geklappt und fixiert wird. Hierbei können Versteifungselemente vorgesehen werden, wie beispielsweise eine schräge Strebe zwischen Dachfläche und Rückwand.

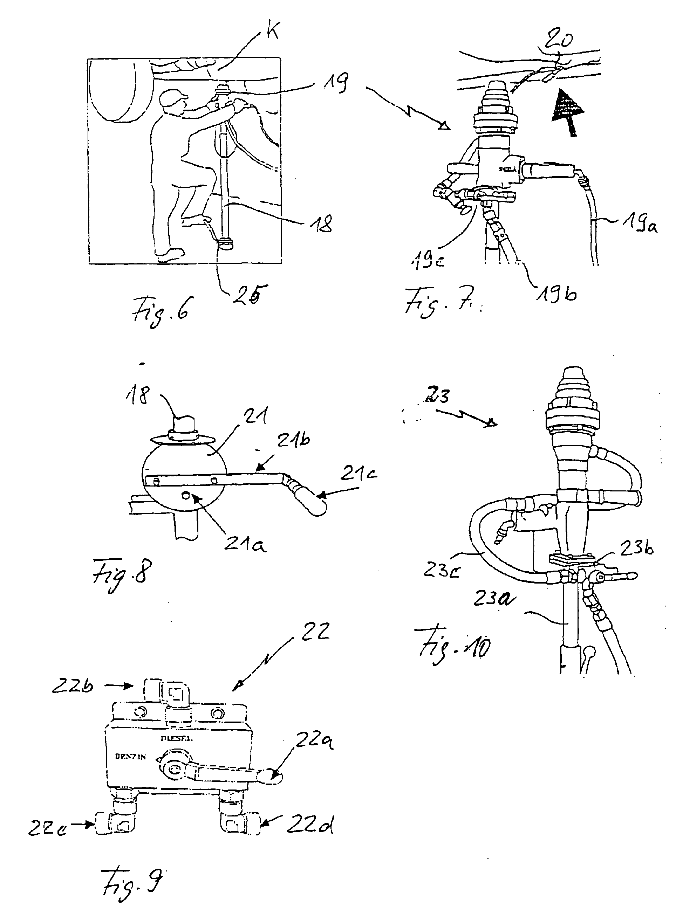

Bei einer solchen Ausführungsform kann anstelle einer Kurbel mit Sicherheitsfeder auch ein Hydraulikzylinder an den beiden Seiten des Containers zum Anheben des Daches vorgesehen werden. In Fig. 3 ist eine Sicherheitsstange 4a zwischen Dach und Containerboden angeordnet, um das Dach abzustützen. Eine solche Sicherheitsstange kann bei einer Betätigung durch Hydraulikzylinder entfallen.

Beiderseits der Tragarme 6 sind in der Rückwand 7 Türelemente 8a und 8b ausgebildet, die über ein Scharnier längs der Bodenwand 9 nach außen abklappbar sind, wie dies Fig. 3 zeigt.

In der Transportstellung nach Fig. 1 sind vor den Türelementen 8a, 8b großvolumige Sammelbehälter 10 in dem Container 1 positioniert, die in der Betriebsstellung nach Fig. 2 und 3 auf die nach außen weggeklappten Türelemente 8a, 8b verfahren werden, wie dies Fig. 3 schematisch zeigt, damit der Arbeitsraum im Container freigegeben wird. Damit durch die mobile Trockenlegungsstation eine größere Anzahl von Fahrzeugen trocken gelegt werden kann, sind großvolumige Sammelbehälter 10 vorgesehen, die ein entsprechendes Fassungsvermögen haben, wenn die verschiedenen Flüssigkeiten aus einer größeren Anzahl von Kraftfahrzeugen aufgenommen werden soll. Bei dem dargestellten Ausführungsbeispiel werden vier Sammelbehälter 10 für Benzin, Diesel, Altöl und Kühlwasser vorgesehen, wobei die einzelnen Behälter auch ein unterschiedliches Fassungsvolumen haben können.

Die Sammelbehälter 10 sind auf dem Boden 9 des Containers 1 auf Schienen 11 verfahrbar, wie dies Fig. 2 schematisch zeigt. Diese Schienen 11 sind ebenfalls an den Türelementen 8a und 8b vorgesehen, wie dies Fig. 3 schematisch zeigt, damit die Sammelbehälter 10 auf die abgeklappten Türelemente verfahren werden können.

Die Türelemente 8 sind derart an der Bodenwand des Containers angelenkt, dass sie im geöffneten Zustand mit der Bodenwand 9 des Containers fluchten. An den äußeren Enden der Türelemente sind Einrichtungen für einen Höhenausgleich angebracht, damit bei unebenem Boden die nach außen geklappten Türelemente in einer horizontalen Stellung fixiert werden können. Beispielsweise können Spindeln 8c mit einer Abstützplatte an den Türelementen vorgesehen sein, die durch Verdrehen auf die entsprechende Höhe eingestellt werden können und sich über die Abstützplatten auf dem Boden abstützen.

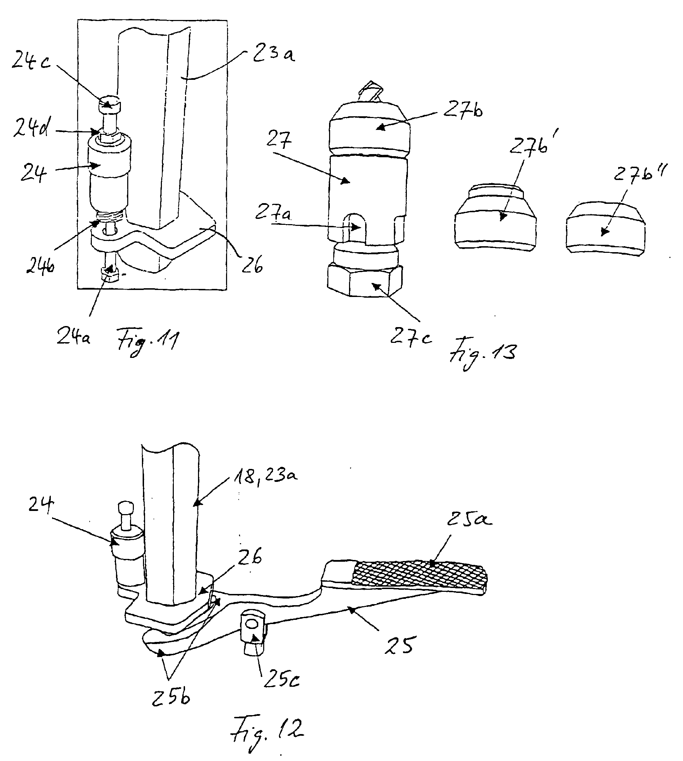

Fig. 4 a zeigt zwei der Sammelbehälter 10 in der Stellung innerhalb des Containers bei abgeklapptem Türelement 8 und Fig. 4b die nach außen auf das abgeklappte Türelement verschobenen Sammelbehälter 10. Füllleitungen 14 und Schläuche für eine Überfüllsicherung sind flexibel an den Sammelbehältern 10 angebracht und so verlegt, dass sie das Verschieben der Sammelbehälter ohne Demontage der Leitungen ermöglichen. Zwei Winkel einer Wandbefestigung 15 sind in den Innenraum des Containers gerichtet. Die Leitungen 14a und 14b (in Fig. 4 ist die zweite Leitung durch die erste jeweils verdeckt) sind als flexible Gummischläuche ausgelegt. Ein Anschlusswinkel von starren Leitungen 16, die vorzugsweise aus verzinkten Stahlrohren bestehen, sind ebenfalls in den Innenraum gerichtet. Die Winkel der Wandbefestigung 15 sind höher angeordnet als die Winkel der starren Leitungen 16 auf den Sammelbehältern, um diese ungehindert verschieben zu können.

Die Anlage ist mit einer pneumatischen Überfüllsicherung zur Überwachung der Sammelbehälter ausgestattet. Diese Überfüllsicherungen haben jeweils eine optische und eine akustische Anzeige, die im Einzelnen nicht wiedergegeben ist.

Zwischen den Sammelbehältern 10 und den Schienen 11 wird eine Sicherung für die jeweilige Position der Sammelbehälter vorgesehen. Vorzugsweise wird hierfür eine seitlich abgeflachte Welle vorgesehen, die in der Bodenwand 9 des Containers gelagert und um 90° verdrehbar ist.

In dem Container 1 sind ferner verschiedene Entsorgungsgeräte vorgesehen, die nachfolgend im Einzelnen näher erläutert werden. Die Energieversorgung für diese Entsorgungsgeräte wie Pumpen und Absaugeinrichtungen erfolgt über einen am Container 1 angebrachten Druckluftanschluss 12, an dem ein externer Kompressor angeschlossen werden kann. Von dem in Fig. 2 schematisch angedeuteten zentralen Druckluftanschluss 12 führen nicht dargestellte Leitungen zu den einzelnen Entsorgungsgeräten, um diese anzutreiben.

Im gesamten Arbeitsbereich sind auf dem Boden 9 des Containers Spezialroste vorgesehen.

Anstelle einer externen Energieversorgung, die auch als Stromversorgung ausgelegt sein kann, kann auch ein Antriebsaggregat, wie beispielsweise ein Kompressor oder ein Stromerzeugungsgerät, innerhalb des Containers 1 vorgesehen werden, das zusammen mit dem Container 1 zu den Einsatzorten transportiert wird. Vorzugsweise wird in einem solchen Fall auch das Antriebsaggregat am Container ausfahrbar vorgesehen, entsprechend den ausfahrbaren Sammelbehältern 10, damit der Arbeitsraum im Container 1 nicht behindert wird.

Unter den Tragarmen 6 sind Schwenkarme 13 für Trichter und dergleichen Entsorgungsgeräte schwenkbar an der Rückwand 7 des Containers oder an einer Säule angebracht. Von Hand zu betätigende Entsorgungsgeräte, wie beispielsweise eine Bremsschlauchzange, sind ebenfalls vorzugsweise an der Rückwand 7 des Containers mit entsprechenden Schlauchverbindungen angebracht, so dass sie abgenommen werden können, damit unter dem auf den Tragarmen 6 aufliegenden Fahrzeug gearbeitet werden kann.

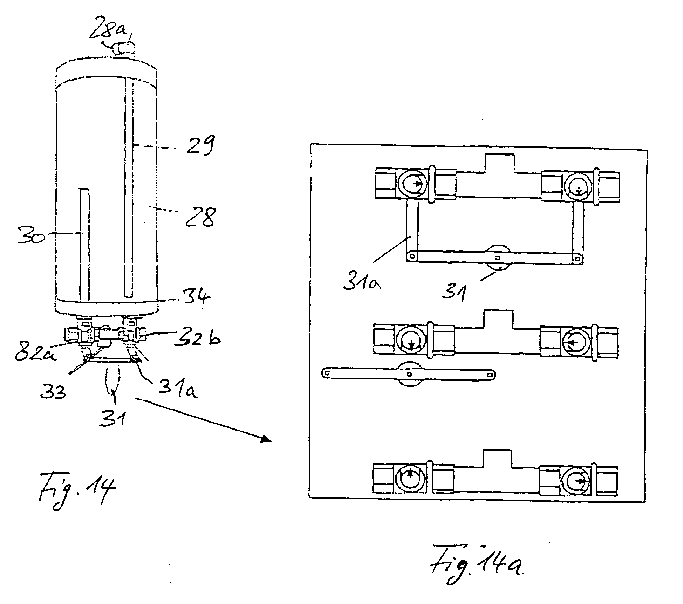

Zum Fixieren der Schwenkarme 13 beim Transport kann eine in Fig. 5 wiedergegebene Fixierungsschiene an der Rückwand des Containers angelenkt werden. Fig. 5a zeigt eine Seitenansicht der über ein Scharnier 17a an der Rückwand 7 des Containers angelenkten Fixierungsschiene 17 im geöffneten Zustand, während Fig. 5b die Fixierungsschiene 17 im geschlossenen Zustand in einer Seitenansicht zeigt. Fig. 5c zeigt eine Draufsicht auf die geschlossene Fixierungsschiene 17, die über einen Sicherungsstift 17b mit Splint 17c an dem einen Schwenkarm 13a befestigt ist und über eine seitliche Öffnung den anderen Schwenkarm 13b übergreift, so dass auch dieser in seiner Stellung beim Transport fixiert ist.

Nach einer anderen Ausführungsform können die Schwenkarme 13a, 13b mittels einer Klemmvorrichtung an einem Gestänge festgelegt werden, das während des Transports an den Sammelbehältern 10 beispielsweise an deren Domdeckeln verankert wird.

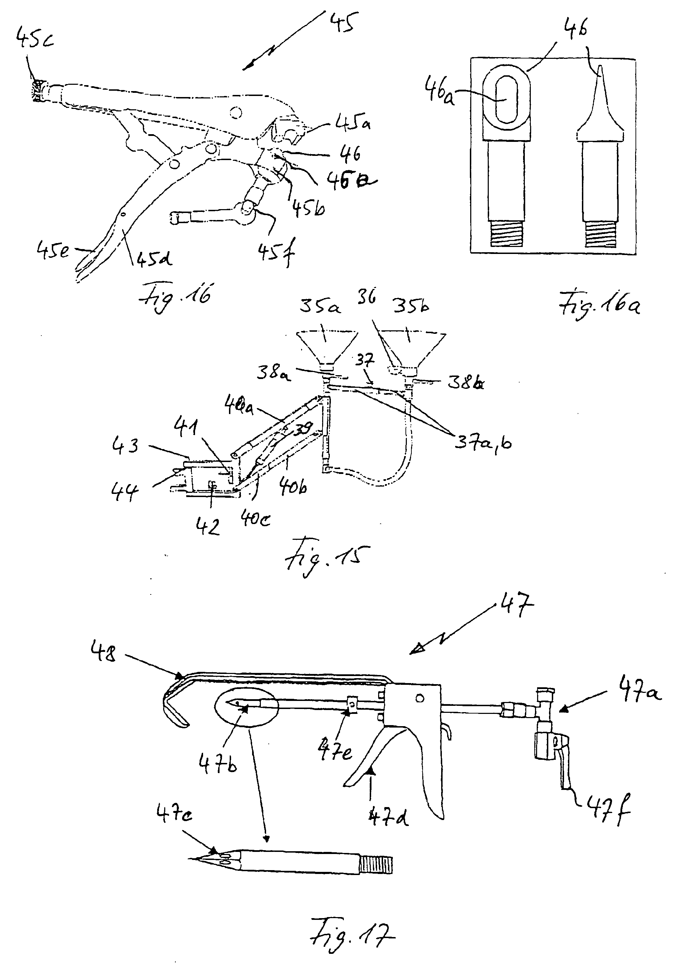

In dem Container ist ein Tankanbohrgerät vorgesehen, um den Treibstoff aus dem Tank eines Fahrzeugs ableiten zu können, wenn dies über einen Tanksaugschlauch nicht möglich oder nicht zweckmäßig sein sollte. Fig. 6 zeigt das auf einem Ständer 18 angebrachte Bohrwerk 19, das durch Betätigen eines Fußpedals 25 nach oben gedrückt wird, wobei zugleich ein Hebel für den an dem Bohrwerk angebrachten Druckluftmotor betätigt werden kann. In Fig. 6 ist bei K ein Kraftfahrzeug angedeutet. Fig. 7 zeigt eine Ansicht des Bohrwerks 19 mit einer Anschlussleitung 19a für den Druckluftmotor. Mit 19b ist eine Vakuumleitung bezeichnet, die an einem Kugelhahn 19c angeschlossen ist, der nach dem Anbohren des Tanks geöffnet werden kann, damit der Treibstoff über die Saugleitung 19b abgesaugt werden kann.

Mit 20 ist ein Potentialausgleich in Fig. 7 bezeichnet, der vor dem Absaugen an einer leitenden Stelle am Kraftfahrzeug angebracht wird und nach dem Absaugen wieder entfernt wird. Nach dem Absaugen des Treibstoffs wird die in den Tank gebohrte Öffnung mit einem Stopfen verschlossen.

Das Tankanbohrgerät 19 wird durch einen Schwenkarm 13 unter dem Tank des Fahrzeugs plaziert. Am unteren Ende der Säule 18 für das Bohrgerät 19 ist eine Exzenterscheibe 21 mit einem Drehpunkt 21 a angebracht, die über einen Hebel 2 1 b mit Handknauf 21 c so verdreht werden kann, dass das gesamte Gerät vom Boden abgehoben oder auf diesen abgesenkt werden kann. Durch die Abstützung am Boden ergibt sich eine gute Stabilität beim Bohren nach oben in den Tank. Durch Lösen des Exzenterhebels 21b hebt sich der obere Teil des Bohrgeräts, vorzugsweise unterstützt durch eine nicht dargestellte Gasdruckfeder, bis zum Boden des Fahrzeugtanks.

Fig. 9 zeigt ein Treibstoffsteuerventil 22, das an der Saugleitung 19b des Bohrgerätes angeschlossen ist und eine Auswahl zwischen Benzin und Diesel ermöglicht. Ein Handhebel 22a betätigt einen im Gehäuse des Steuerventils 22 montieren Dreiwege-Kugelhahn, so dass der Treibstoff von einem Einlass 22b, an dem der Saugschlauch 19b angeschlossen ist, je nach Hebenstellung zu den Auslässen 22c oder 22d geleitet wird, die zu einer nicht dargestellten Benzinpumpe bzw. Dieselpumpe führen, durch die der Treibstoff in den jeweiligen Sammelbehälter 10 gepumpt wird.

Fig. 10 zeigt ein Getriebeanbohrgerät 23, das bei Schalt- und Ausgleichsgetrieben ohne Ablassschraube zum Einsatz kommt. Dieses Getriebeanbohrgerät 23 hat einen Bohrer mit Spezialschliff und einen entsprechend starken Druckluftmotor für den Antrieb. Dieses Getriebeanbohrgerät 23 ist auf einem Ständer 23a fahrbar im Container 1 vorgesehen. Die Höhenverstellung erfolgt über eine nicht dargestellte Gasdruckfeder.

Um das Durchstoßen des Bohrers in das Getriebe und somit in die gehärteten Zahnräder zu verhindern, wird die Bohrtiefe bei dem Getriebeanbohrgerät 23 begrenzt. Hierfür ist am unteren Ende der Säule 23a eine Handspindel 24 (Fig. 12) angebracht, in der ein Innengewinde eingearbeitet ist. Mit dieser Handspindel 24 kann der Weg eines Fußpedals 25 (Fig. 12) auf die erforderliche Bohrtiefe eingestellt werden. Mit 24a ist in Fig. 11 eine Einstellstange bezeichnet, an der sich ein Außengewinde 24b befindet. Diese Einstellstange 24a ist starr auf einer nicht dargestellten Bodenplatte des Getriebeanbohrgerätes montiert. 24c ist eine Einstellschraube mit einer Kontermutter 24d, mit der die minimale Bohrtiefe eingestellt wird.

Mit dem in Fig. 12 wiedergegebenen Fußpedal 25 wird das Bohrwerk den gesamten Bohrweg nach oben gedrückt. Dies gilt für das Tankanbohrgerät 19 sowie für das Getriebeanbohrgerät 23. Durch Druck auf eine Trittfläche 25a wird eine Druckplatte 26 von einer Gabel 25b des Fußpedals nach oben gedrückt. Das Fußpedal ist auf einem Wippgelenk 25c gelagert. Das Wippgelenk 25c ist mit der Bodenplatte des Bohrgerätes bzw. mit einem Bodenfuß im Falle einer Schwenkarmausrührung verschraubt. Die Druckplatte 26 ist starr mit der Schubstange bzw. dem Ständer 18 bzw. 23a des Bohrwerks verbunden.

Um die Bohrtiefe variieren zu können, kann anstelle der Handspindel 24 ein anderer Aufsatz am Bohrgerät vorgesehen werden. Fig. 13 zeigt einen Grundaufsatz 27 mit einer horizontal durchgehenden Nut 27a, durch die ein ungehinderter Austritt der anfallenden Bohrspäne gewährleistet ist. Distanzaufsätze 27b' - 27b" weisen unterschiedliche Höhen auf und werden je nach Getriebeboden verwendet. Beispielsweise wird der Distanzaufsatz 27b" für Gussmaterial, der Aufsatz 27b' für Aluminium und der Aufsatz 27b für Stahlblech verwendet. Mit 27c ist das Bohrfutter bezeichnet.

Beim Absaugen des Treibstoffs aus dem Tank wird dieser durch mehrere Siebvorrichtungen bereits im Tankanbohrgerät 19 weitgehend von Schmutzpartikeln gereinigt, wobei die nachfolgende Filterung von Benzin und Diesel vor dem Pumpeneingang getrennt stattfindet.

Im Container 1 ist ferner eine Qualitätskontrolle für das Erkennen und Trennen von sauberem Benzin und verschmutzten Stoffen vorgesehen. Fig. 14 zeigt einen im Container 1 montierten Glaszylinder 28, in dem ein Befüllrohr 29 so angeordnet ist, dass es knapp am Boden des Glaszylinders endet, um ein Schäumen der Flüssigkeiten zu vermeiden. Das Befüllrohr 29 ist bei 28a an die Druckseite einer nicht dargestellten Pumpe angeschlossen. Mit 30 ist ein Kontrollmengenrohr bezeichnet, das durch seine Höhe die Menge des zu prüfenden Mediums bestimmt. Falls die Stellung eines Hebels 31 nicht beachtet wird, ist die Qualitätskontrolle so ausgelegt, dass die Überlaufmenge direkt in den Sammelbehälter für verschmutzte Stoffe geleitet wird. Der Hebel 31 ist über ein Gestänge 31 a mit zwei Kugelhähnen 32a und 32b verbunden. Mit 33 ist der Ausgang für verschmutzte Stoffe bezeichnet. Fig. 14a zeigt die verschiedenen Stellungen des Hebels 31. In der oberen Mittelstellung wird verschmutzter Treibstoff zum Ablass 33 geleitet. Durch Verschieben des Hebels bzw. der beiden Kugelhähne kann der Treibstoff entweder über den Ausgang 32b für sauberes Benzin oder über den Ausgang 33 abgeleitet werden. Durch diesen Vorgang wird gleichzeitig eine Öffnung 34 für Restentleerung freigegeben, welche sich direkt am Boden des Zylinders 28 für die Qualitätskontrolle befindet. In die Leitung von der Benzinpumpe zum Sammelbehälter 10 ist ein Flammschutzfilter eingebaut, um eine Explosion auszuschließen.

Zur Abnahme von Altöl nach Öffnen der Ablassschraube an der Ölwanne eines Fahrzeugs werden die in Fig. 15 vorgesehenen Trichter 35a und 35b verwendet, die zum Auffangen des Altöls aus Getriebe und Motor vorgesehen sind. Bei 36 ist eine Ablage zur Aufbewahrung der Ablassschrauben an einem der Trichter vorgesehen. Der Abstand zwischen den beiden Trichtern kann nach Öffnen einer Klemmschraube 37 und durch Verschieben von Stangen 37a und b so eingestellt werden, dass eine optimale Positionierung der Trichter unter den Ablassschrauben von Getriebe und Motor gewährleistet ist. Durch Betätigen der Hebel von Kugelhähnen 38a, 38b wird der Weg zur Pumpe geöffnet oder geschlossen. Eine pneumatische Hebeeinrichtung 39 zwischen zwei Lenkern 40a und 40b eines die Trichter tragenden Gestänges ermöglicht ein vertikales Verschieben der Trichter, so dass diese direkt an dem Getriebe oder am Motor angesetzt werden können, um eine geringe Fallhöhe des Altöls zu erreichen. Die Lenker 40 bilden ein Parallelogramm, so dass beim Anheben und Absenken ein paralleler Verlauf der Lenker erfolgt. Mit 41 ist ein Kipphebel und mit 42 ein Druckluftbegrenzer für die Betätigung des Druckluftzylinders 39 bezeichnet. Der untere Lenker 40b weist eine Gabelkröpfung bei 40c auf, die die Bewegung des Druckluftzylinders 39 nicht behindert. Das Gestänge ist so ausgelegt, dass die horizontale Bewegung mittels zweier Gelenke geführt wird, wenn die Trichter an der erforderlichen Stelle positioniert werden. Mit 43 ist eine Vorspannkappe und mit 44 eine Reibscheibe an einem der Gelenke bezeichnet, die die Funktion einer Bremse haben, so dass die eingestellte Position der Trichter beibehalten wird. Durch Anziehen der Vorspannkappe 43 wird eine verstärkte Quetschung der Reibscheibe 44 erreicht, um die Bremswirkung zu erhöhen.

An dem Getriebeanbohrgerät 23 ist auf einer Seite des Dreiwegehahns 23b ein zusätzlicher Saugschlauch 23c angeschlossen, mittels dem Hydraulikflüssigkeit abgesaugt werden kann.

Zum Absaugen von Bremsflüssigkeit ist im Container 1 eine Bremsschlauchzange 45 vorgesehen, die in Fig. 16 wiedergegeben ist. Die Klemmbacken 45a und 45b sind so geformt, dass sie alle gängigen Schlauchgrößen aufnehmen können. Bei 46 ist eine Schneide am unteren Klemmbacken 45b vorgesehen, in der eine Bohrung 46a zum Absaugen der Bremsflüssigkeit aus dem Bremsschlauch ausgebildet ist. Ein fester Sitz der Zange kann durch eine Verstellschraube 45c eingestellt werden. Durch Drücken des Spannhebels 45d der Zange wird die Zange geschlossen, wobei die Schneide 46 den Bremsschlauch aufschneidet. Durch einen Entspannhebel 45e kann die Zange wieder geöffnet werden. An der unteren Klemmbacke 45b ist ein Anschlussnippel 45f vorgesehen, an den ein Saugschlauch angeschlossen wird. Fig. 16a zeigt im Einzelnen die Schneide 46 in zwei um 90° verdrehten Ansichten.

Fig. 17 zeigt eine im Container 1 vorgesehene Absaugpistole 47, die das Absaugen von Öl aus Servolenkung und Automatikgetriebe ohne Schlauchtrennung ermöglicht. An der Saugpistole 47 ist ein Bügel 48 zum Umgreifen des Schlauches angebracht. Nach Umgreifen des Schlauches wird eine Lanze 47a vorgeschoben, die eine Spitze 47b aufweist, die am Schlauch angesetzt wird. Die Spitze 47b kann als Dreikant ausgebildet sein, damit sie auch bei Schläuchen mit Stahlgewebe eingesetzt werden kann. An der Spitze befinden sich Öffnungen 47c zum Absaugen der Flüssigkeit. Für den Vorschub der Lanze 47a wird eine handelsübliche Vorschubpistole mit einem Betätigungshebel 47d verwendet. Der Vorschubweg wird so begrenzt, dass die Bohrung an der Lanzenspitze innerhalb der Schlauchwände zu liegen kommt. Bei 47e ist eine Stellschraube zum Einstellen der Länge der Lanze vorgesehen. An der Lanze ist ein Schlauch 47f angeschlossen, durch den die abgesaugte Flüssigkeit abgeleitet wird.

Im Container 1 sind im Einzelnen nicht dargestellte Pumpen für die Absaugvorgänge vorgesehen. Ferner wird in dem Container ein Stoßdämpferanbohrgerät vorzugsweise an der Rückwand 7 installiert. Für Bremsflüssigkeit ist im Container ein Vakuumbehälter stationär vorgesehen, der ein geringeres Volumen als die Sammelbehälter 10 hat und deshalb stationär im Container angeordnet werden kann. Gleiches gilt für einen Vakuumbehälter für Scheibenfrostschutzmittel.

## Patentansprüche

1. Mobile Trockenlegungsstation für Kraftfahrzeuge, umfassend
einen Container (1), dessen Seitenwand und obere Wand hochklappbar ist und in dem Tragarme (6) für die Aufnahme eines Fahrzeugs stationär angeordnet sind,
an der Rückwand (7) des Containers angelenkte Schwenkarme (13) für Entsorgungsgeräte, und
wenigstens ein in der Rückwand (7) ausgebildetes Türelement (8), das zur Verlängerung des Bodens des Containers nach außen abklappbar ist, wobei im Bereich vor dem Türelement (8) Sammelbehälter (10) im Container positioniert sind, die durch die Türöffnung auf das abgeklappte Türelement verfahrbar sind.

2. Trockenlegungsstation nach Anspruch 1, wobei an der Innenseite der Türelemente (8) Schienen (11) angebracht sind, die sich am Boden (9) des Containers fortsetzen.

3. Trockenlegungsbehälter nach Anspruch 1 und 2, wobei an den äußeren Enden der Türelemente (8) einstellbare Abstützelemente (8c) vorgesehen sind.

4. Trockenlegungsstation nach den vorhergehenden Ansprüchen, wobei für die Schwenkarme (13) eine Fixierungseinrichtung (17) vorgesehen ist, um diese während des Transports in ihrer Lage zu fixieren.

5. Trockenlegungsstation nach den vorhergehenden Ansprüchen, wobei in dem Container (1) weitere Entsorgungsgeräte wie ein Tankanbohrgerät (19), ein Getriebeanbohrgerät (23) und dergleichen vorgesehen sind.

## Claims

1. Mobile draining station for motor vehicles, comprising
a container (1) whose side wall and upper wall can be lifted up and in which carrier arms (6) for receiving a vehicle are arranged in a stationary manner;
pivoting arms (13) for removal devices pivotably connected to the rear wall (7) of the container;
and at least one door element (8) which is embodied in the rear wall (7) and which can be folded out downwards in order to extend the base of the container, wherein
collectors (10) are positioned in the container in the region in front of the door element (8) and can move through the door opening onto the outwardly folded door element.

2. Mobile draining station according to claim 1, wherein on the inside of the door elements (8) rails (11) are mounted which are continued on the base (9) of the container.

3. Mobile draining station according to claims 1 and 2, wherein at the outer ends of the door elements (8) adjustable supporting elements (8c) are provided.

4. Mobile draining station according to the preceding claims, wherein for the pivoting arms (13) a fixing means (17) is provided to fix these in position during transport.

5. Mobile draining station according to the preceding claims, wherein in the container (1) further removal devices such as a tank boring device (19), a gear housing boring device (23) and the like are provided.

## Revendications

1. Station d'assèchement mobile pour véhicules automobiles comprenant un conteneur (1) dont la paroi latérale et la paroi supérieure peuvent être relevées et dans lequel sont disposés de manière stationnaire des bras porteurs (6) pour recevoir un véhicule automobile, des bras pivotants (13) articulés sur la paroi arrière (7) du conteneur et servant à porter des dispositifs d'élimination de fluides en tant que déchets et au moins un élément de porte (8) configuré dans la paroi arrière (7) qui peut être rabattu vers l'extérieur pour prolonger le fond du conteneur, des réservoirs collecteurs (10), qui peuvent être déplacés à travers l'ouverture de porte pour être positionnés sur l'élément de porte rabattu, étant positionnés dans le conteneur dans la zone située devant l'élément de porte (8).

2. Station d'assèchement selon la revendication 1, **caractérisée en ce que** sur le côté intérieur des éléments de porte (8) sont disposés des rails (11) qui se prolongent sur le fond (9) du conteneur.

3. Station d'assèchement selon les revendications 1 et 2, **caractérisée en ce que** sur les extrémités extérieures des éléments de portes (8) sont prévus des éléments d'appui réglables (8c).

4. Station d'assèchement selon les revendications précédentes, **caractérisée en ce qu'**un dispositif de fixation (17) est prévu pour les bras pivotants (13) afin d'immobiliser ceux-ci dans leur position lors du transport.

5. Station d'assèchement selon les revendications précédentes, **caractérisée en ce que** d'autres dispositifs d'élimination de fluides en tant que déchets, tels qu'un dispositif de perçage pour les réservoirs (19), un dispositif de perçage pour les boîtes de vitesses (23) et des dispositifs similaires, sont prévus dans le conteneur (1).
